(19) Europäisches Patentamt
European Patent Office
Office européen des brevets

(11) Publication number: 0 083 988
B1

(12) **EUROPEAN PATENT SPECIFICATION**

(45) Date of publication of patent specification: **11.11.87**

(51) Int. Cl.$^4$: **G 02 F 1/17**

(21) Application number: **83300116.7**

(22) Date of filing: **10.01.83**

# (54) Electrochromic display device.

(30) Priority: **11.01.82 JP 2622/82**
**07.09.82 JP 156065/82**

(43) Date of publication of application:
**20.07.83 Bulletin 83/29**

(45) Publication of the grant of the patent:
**11.11.87 Bulletin 87/46**

(84) Designated Contracting States:
**CH DE FR GB LI**

(56) References cited:
**FR-A-2 093 643**
**FR-A-2 369 585**
**GB-A-2 014 326**
**US-A-3 840 287**

(73) Proprietor: **SEIKO INSTRUMENTS INC.**
**31-1, Kameido 6-chome Koto-ku**
**Tokyo 136 (JP)**

(72) Inventor: **Kakiuchi, Hiroshi**
**K.K. DAINI SEIKOSHA 6-31-1, Kameido**
**Koto-ku Tokyo (JP)**

(74) Representative: **Caro, William Egerton et al**
**J. MILLER & CO. Lincoln House 296-302 High Holborn**
**London WC1V 7JH (GB)**

**EP 0 083 988 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to electrochromic display devices.

In electrochromic display devices usually an electrolyte in the form of an electrolytic solution is used. However, when an electrolytic solution is used there are problems due to air bubbles or damage as a result of the differential rate of expansion between the electrochromic display device and the electrolytic solution. Consequently, solid electrolytes have been given consideration, especially for the proton conductor. Examples of solid electrolytes are metal oxide thin films such as silicon dioxide or tantalum oxide. However, these electrolytes have a large electrical resistance so that electrochromic display devices with such solid electrolytes have a slow response time and need a relatively large driving voltage. Moreover, with solid electrolytes the electrical contact between electrodes and electrolyte has been considered as unreliable. In the case of an electrolyte in the form of an electrolytic solution because of fluidity sufficient electrical contact can be expected between electrodes and electrolyte but in the case of a solid electrolyte stripping may occur especially when the external voltage has been applied for a considerable period. This is an important factor as far as stability is concerned.

A gelated electrolyte has been tried in electrochromic display devices but trials have merely used existing gelating agents in known electrolytic solutions. This has meant that the applied field is limited and the technique is not applicable to any electrolytic solution. Moreover, patterning of the surface of gelled electrolyte has proved to be difficult.

US—A—4116545 discloses an electrochromic display device having two electrodes, one of which is made of electrochromic material, and an electrolyte. The electrolyte is an electrolytic solution gelated by a polymer, the polymer being a copolymer of ethylene sulphonic acid which is soluble in sulphuric acid and, for example, styrene which is insoluble in sulphuric acid.

GB—A—2014326 discloses an electrochromic display device in which the electrolyte is a copolymer of a vinyl monomer and an acid group containing monomer.

The present invention seeks to provide an electrochromic display device with a gelated electrolyte which gives a response time that is not inferior to that of electrolytic solutions and which has adhesion properties that make it easy to handle.

According to one aspect of the present invention there is provided an electrochromic display device having at least two electrodes at least one of which is made of electrochromic material and an electrolyte which is an electrolytic solution gelated by a polymer, characterised in that the solvent of the solution is propylene carbonate, and said polymer is a copolymer of any one of vinylacetate, methylmethacrylate, methylacrylate, vinylpyridine and vinylpyrrolidone and any one of styrene, vinylchloride, ethylene, propylene and vinyl carbazole

In one example of the present invention the polymer is made from vinylacetate and ethylene, vinylacetate being present in a molar ratio of 70%—80%.

According to another aspect of the present invention, there is provided an electrochromic display device having at least two electrodes at least one of which is made of electrochromic material and an electrolyte which is an electrolytic solution gelated by a polymer, said polymer being cross-linked by a cross-linking agent, characterised in that the triple "polymer-cross-linking agent-solvent" is one of the following: polyvinyl alcohol—dicarboxylic acid or anhydride—water, polyacrylamide—methylenebisacrylamide — water, polymethylacrylate — divinylbenzene — propylene carbonate, polyvinylacetate—divinylbenzene—propylene carbonate, polyvinylacetate—divinyladipate—acetonitrile.

Preferably, the dicarboxylic acid is maleic acid or adipic acid and the dicarboxylic anhydride is pyromellitic dianhydride or maleic anhydride.

The pyromellitic dianhydride/polyvinylalcohol weight ratio may be more than 0.02.

The invention is illustrated, merely by way of example, in the accompanying drawings, in which:

Figure 1 indicates the variation of solubility of a vinylacetatepolyethylene polymer in propylene carbonate when the copolymerisation ratio is changed;

Figure 2 shows the display pattern of an electrochromic display device according to the present invention;

Figure 3 is a cross-section of the electrochromic display device of Figure 2;

Figure 4 shows graphically the time variation of the degree of swelling of an electrolyte including propylene carbonate as a solvent with and without an electrolyte salt therein;

Figure 5 illustrates graphically the electrical conductivity between an electrolyte solution with and without the swelled polymer at different voltages;

Figure 6 shows graphically the absorption of water by a polymer when pyromellitic anhydride is used as the cross-linking agent, the reaction time and amount of cross-linking agent being varied;

Figure 7 is a cross-sectional view of an electrochromic display device according to the present invention;

Figure 8 illustrates the display pattern produced by the display device of Figure 7;

Figure 9 indicates graphically the gelation of propylene carbonate by methylacrylate and divinylbenzene, the liquid/monomer and divinylbenzene monomer ratios being varied;

Figure 10 indicates the variation of electrical resistance as the liquid/monomer ratio is varied; and

Figure 11 is a cross-sectional view of an electrochromic display device according to the present invention.

The basic principle of the present invention is to gelate an electrolytic solution by adding a polymer so that the resulting electrolyte contains as much liquid as possible. If enough liquid is held in the polymer one can expect the electrolyte to have an electrical conductivity comparable to that of the electrolytic solution alone and the electrode/electrolyte contact in an electrochromic display device to be as reliable as that with the electrolytic solution alone.

The problem which the present invention seeks to solve is how to obtain a polymer which swells to a specific degree for specified solvents. One method of obtaining such a polymer is to increase the molecular weight by cross-linking and another method is to change the copolymerisation ratio between a soluble polymer and an insoluble polymer.

Example 1

Propylene carbonate is widely used as a solvent in the electrolyte of electrochromic display devices which use tungsten oxide as the electrochromic material. It was, therefore, decided to find a polymer which, in propylene carbonate, would cause it to gel and swell. Whether cross-linking a soluble polymer or copolymerising a soluble polymer and an insoluble polymer, as previously mentioned, it is first necessary to find those polymers which are soluble in propylene carbonate. Solubility tests show that polyvinylacetate, polymethylmethacrylate, polymethylacrylate, polyvinylpyrrolidone and polyvinylpyridine are soluble in propylene carbonate. It was also found that polystyrene, polyvinylchloride, polyethylene, polypropylene and polyvinylcarbazole are insoluble in propylene carbonate.

Firstly for each of the soluble polymers, the corresponding monomer and divinylbenzene were copolymerised and the copolymerisation ratio at which the resulting polymer gelled or swelled was investigated.

Secondly the copolymer of polyvinylacetate and polyethylene was investigated. A set of samples in which the copolymerisation ratio was varied was obtained and swelling of these samples was tested. The results shown in Figure 1 were obtained and it was revealed that at a weight ratio of 80% vinylacetate to 20% ethylene the polymer swelled.

The vinylacetate-ethylene copolymer and a vinylacetate-divinylbenzene copolymer (containing divinylbenzene at 0.1% by weight) were used in an electrochromic display device. The electrochromic display device had a film of tungsten oxide as the electrochromic material vacuum evaporated at $1.3\times10^{-5}$ mbar ($1\times10^{-5}$ torr) in the display pattern shown in Figure 2 and the film was then heated by a resistive heater. The thickness of the film was 500 nm and it was evaporated on an indium tin oxide (ITO) transparent film. A sectional view of the electrochromic display device is shown in Figure 3. A glass plate 1 had an ITO transparent film 2 thereon. Electrochromic electrodes 3 of tungsten oxide were formed on the ITO transparent film. An electrolyte 4 consisting of a copolymer swelled by propylene carbonate and lithium perchlorate is in contact with the electrochromic electrodes 3 and a gold film 5 was evaporated on a glass plate 6. This electrochromic display device was coloured and bleached by the application of a voltage of +1.5V. The response time was comparable to that of an electrochromic display device using an electrolytic solution of propylene carbonate and lithium perchlorate alone, namely 0.5 sec. The same results were obtained whether using vinylacetate-ethylene copolymer or vinylacetate-divinylbenzene as the copolymer.

A more detailed investigation was made of the vinylacetate-ethylene copolymer. Figure 4 indicates the time variation of the degree of swelling measured by the weight increase with and without the lithium perchlorate which is the electrolytic salt in the electrolyte. As will be seen from Figure 4 the polymer weight increases by about six times on swelling. This is an indication of the amount of electrolytic solution absorbed.

The electrical conductivity of the electrolyte was measured and the result is shown in Figure 5. As will be seen the electrolyte has an electrical resistance which is lower than that of the electrolytic solution alone. The reason why these results come about is not obvious but one possible explanation is that the presence of the copolymer in the electrolyte prevents the formation of ion-pairs. More specifically, the inclusion of too much lithium perchlorate in solution lowers the electrical conductivity because positive and negative ions form ion-pairs and these ion-pairs cannot contribute to electrical conductivity. Thus if ion-pair formation is prevented somehow, for example by the copolymer, the electrical conductivity will increase.

Example 2

The gelation of an electrolytic solution whose solvent was acetonitrile was investigated. It was found that polyvinylacetate, polymethylmethacrylate and polymethylacrylate are soluble in acetonitrile and polystyrene, polyethylene, polyvinylchloride and polypropylene are insoluble in acetonitrile.

A swelled copolymer was obtained by copolymerization of the corresponding soluble monomers and divinylbenzene. Further a swelled vinylacetate-ethylene copolymer was obtained. This copolymer was made to absorb 0.1M tetraethylammoniumperchlorate/acetonitrile electrolytic solution to form an electrolyte which was used in the electrochromic display device described in Example 1. It was found that the response time of this electrochromic display device was comparable to that of a similar electrochromic display device where the electrolyte was an electrolytic solution of 0.1M tetraethylammonium-perchlorate/acetonitrile alone. Whilst with an electrolytic solution the high vapour pressure could bring

about destruction of the electrochromic display device at high temperature, it was found that the electrolyte which had been gelated by a polymer did not suffer from this problem.

Example 3

Following Example 1 it was found that using polybdenum oxide as the electrochromic material, the same effect was achieved using the same copolymers and electrolytic solutions as in Example 1.

Example 4

Following Example 2 it was found that using molybdenum oxide as the electrochromic material, the same effect was achieved using the same polymers and electrolytic solutions as in Example 2. However, it was found that other electrolytes were possible. Polyvinylalcohol is a water-soluble polymer and cross-linking can be achieved by esterification as follows:

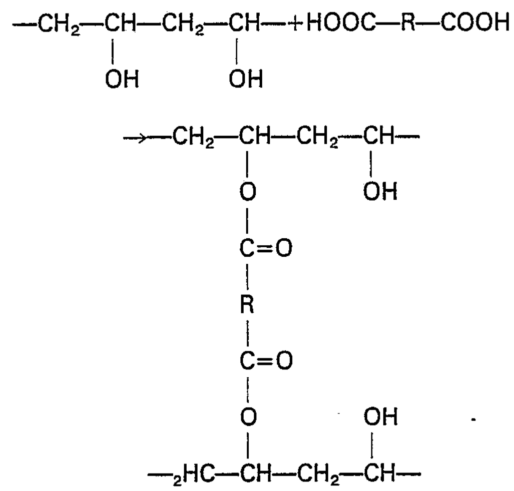

Thus the hydroxy groups of polyvinylalcohol are esterified with the carboxylic acid groups to form ester bonds. When this process is carried out between two polymer chains, cross-linking results. The cross-linking agent was either dicarboxylic acid or the anhydride of dicarboxylic acid.

Generally a cross-linked polymer is insoluble in any solvent due to its extremely high molecular weight so it is difficult to form such polymers as an electrolytic cell on an ITO film. To avoid this difficulty it was found that it is possible to form an electrolytic film using the polymer solution and subsequently effecting cross-linking. One method of achieving this was to mix the polymer and cross-linking agent in water and then using the solution to form a film on a glass substrate, the film then being dried. Finally the film was cross-linked.

Example 5

Pyromellitic dianhydride was examined as a cross-linking agent. Polyvinylalcohol was dissolved in water in the ratio of 10% by weight and then pyromellitic dianhydride was added to produce solutions with 0.02, 0.04, 0.06, 0.08, 0.1 cross-linking agent/polymer weight ratio. Pyromellitic dianhydride dissolved at around 80°C. The above solutions were used to form transparent films on glass plates which were then dried on a hot plate at around 80°C. It was found that the transparent films were formed without the recrystallisation of pyromellitic dianhydride.

The transparent films were then cross-linked in a furnace at 120°C. Reaction time was set at 1 hour, 2 hours, 3 hours, 4 hours, 5 hours. The results are indicated graphically in Figure 6. From Figure 6 it can be seen that at least 2% by weight of cross-linking agent is necessary to form the transparent film and the largest amount of water was absorbed by the transparent film with 0.04 cross-linking agent/polymer weight ratio and 4 hours reaction time. The weight of this transparent film increased 3.5 times after having absorbed water. In other words the transparent film absorbed 2.5 times its own weight of water.

A solid electrolyte for an electrochromic display device was prepared by causing a transparent film with 0.04 cross-linking agent/polymer weight ratio and 4 hours reaction time to absorb 1M KCl as the electrolytic solution. This solid electrolyte was used in an electrochromic display device according to the present invention and illustrated in Figure 7. This electrochromic display device had a glass substrate 7 on which was formed a transparent conductive film 8 made of tin oxide. On the transparent conductive film 8 were electrochromic electrodes 9 made of Prussian blue. The electrochromic electrodes were formed by the electrolytic reduction of a solution of potassium ferricyanide and ferric chloride in admixture. A solid electrolyte 10, formed as described above, was disposed between the substrate 7 and the glass substrate 13 on which there was a counterelectrode 12 which was formed by evaporation of chromium/gold. The substrates 7, 13 were maintained spaced apart by a spacer 11. The display pattern of the electrochromic display device of Figure 7 is illustrated in Figure 8. The display was changed by varying the applied voltage.

It was found that initially the display produced by this electrochromic display device appeared blue but could be bleached and become colourless by connecting the electrochromic electrodes to the counter electrode. The electrochromic electrodes were each 4 $mm^2$ in area and the electric charge density needed to produce a visible display was 6 $mC/cm^2$. Thus the requisite charge was 240 μC. Thus bleaching was performed by the application of a constant current of 10 μA for 24 sec. In the case where one of the electrochromic electrodes was coloured and the other bleached, the application of a voltage of 0.7 V between the two with the coloured electrochromic electrode at the lower potential caused the coloured electrochromic electrode to be bleached and the bleached electrochromic electrode to be coloured. The response time was 5 sec. With an electrolytic solution used in place of the solid electrolyte 10 the response time was 2 sec. Thus the solid electrolyte has an inferior response time to the electrolytic solution.

Example 6

Example 5 was repeated under the same conditions using pyromellitic dianhydride as the cross-linking agent. In other words a solid electrolyte was made by dissolving 10% by weight of polyvinylalcohol in 1M KCl solution and adding pyromellitic dianhydride in a weight ratio of 0.04 cross-linking agent/polymer. Cross-linking was effected at 120°C for 4 hours and the cross-linked film so produced was made to absorb water to produce the solid electrolyte. This solid electrolyte was used in the electrochromic display device of Figure 7 and evaluated. The response time was found to be 4 sec. which is slightly faster than the response time of the electrochromic display device of Example 5.

Example 7

In this Example an electrode of Prussian blue was formed on the counter electrode 12 of the electrochromic display device of Figure 7. Drive of this electrochromic display device was performed between the upper Prussian blue electrochromic electrode and the lower Prussian blue counter electrode. However, the counter electrode prevented a clear display from being produced so titanium oxide was dispersed in the solid electrolyte in the following manner.

10% by weight of polyvinylalcohol was dissolved in a 1M KCl solution. Titanium oxide which had been ground to a fine powder in a pestle was added and the pyromellitic dianhydride was then added to give a weight ratio of 0.04 cross-linking agent/polymer. The cross-linking conditions were the same as in Example 6 and the film produced was made to absorb water and the resulting electrolyte used in the electrochromic display device of Figure 7.

When an external voltage of 0.7 V was applied between one of the electrochromic electrodes and the counter electrode with the electrochromic electrode at the lower potential, the displayed blue colour was bleached and appeared white because of the titanium oxide in the electrolyte. The response time was 2 sec. which is about the same as that of an electrochromic display device with an electrolytic solution in place of the solid electrolyte.

The faster response time is believed to be the result of the shorter distance between the electrochromic electrode and the counter electrode. In examples 5 and 6 current flowed between the two electrochromic electrodes but in this example current flowed between the electrochromic electrodes and the counter electrode. Thus the thinner the electrochromic display device the lower the electrical resistance of the electrolyte and thus the faster the response time. It will be appreciated from the foregoing Examples that the conductivity of an electrolyte including cross-linked polyvinylalcohol is lower than that of an electrolytic solution. However if the thickness of the electrochromic display device is reduced sufficiently, the response times using a solid electrolyte become comparable.

Example 8

In this example, maleic acid was used as the cross-linking agent. As in Example 5, 10% by weight of a polyvinylalcohol solution was prepared. Maleic acid was added to give a weight ratio of cross-linking agent/polymer of 0.1. Cross-linking was effected at 130°C the reaction time being 1 hour. The resulting polymer film was made to absorb an electrolytic solution to form an electrolyte. However, it was found that the polymer did not conserve its film shape but become like a fine slice of gelatine. In other words, whilst gelation occurred the polymer film lost its shape when absorbing the electrolytic solution. However, the electrolyte could still be used in an electrochromic display device and problems due to air bubbles were avoided. An electrochromic display device constructed as shown in Figure 7 and driven in the same manner as in Example 5 was found to have a response time of 2 seconds.

Example 9

In this example, maleic acid was used as the cross-linking agent but the cross-linking was effected at 130°C with a reaction time of 4 hours. The maleic acid was added to the polyvinylalcohol solution to give a weight ratio of cross-linking agent/polymer of 0.04. The result was a half-gelated polymer as in Example 8. An electrolyte including this polymer had the same properties as the electrolyte of Example 8. From Examples 8 and 9 it will be appreciated that when maleic acid is used as the cross-linking agent it is impossible to form a solid film of electrolyte. This is thought to be due to the difference in reactivity between anhydrides and acids, since anhydrides react in more mild conditions.

Example 10

In this example, cross-linking was performed in the same manner as in Example 5, but the cross-linking agent was adipic acid. The cross-linking agent was used in a weight ratio of 0.04 cross-linking agent/polymer and cross-linking effected at 130°C for the reaction time of 4 hours. Again it was found that it was not possible to form a film of electrolyte but nonetheless electrolyte formed did not suffer from problems due to air bubbles.

Example 11

In this example maleic anhydride was used as the cross-linking agent using the same cross-linking conditions as in Example 6. It was found that a film of solid electrolyte could be formed. This electrolyte was used in the electrochromic display device illustrated in Figure 7 and driven as in Example 6. The response time was found to be 4 seconds.

Example 12

The same cross-linking agent as in Example 5 was used, but in this example polyvinylalcohol was not dissolved in 1M KCl solution but rather in 1M $KClO_4$ solution. The polyvinylalcohol was cross-linked under the same cross-linking conditions as in Example 6 and a solid electrolyte formed. This solid electrolyte was used in the electrochromic display device illustrated in Figure 7 but using tungsten oxide for the electrochromic electrodes which were made by evaporating tungsten oxide film onto the transparent conductive film 8. This produced a clear film of tungsten oxide. The electrochromic electrodes were coloured by a colouring charge of 240 μC which was injected from the counter electrode using a constant current. The colouring charge could be moved between the two electrochromic electrodes by the application of a voltage of 1.5V. The response time was 2 seconds. The response time of a similar electrochromic display device using an electrolytic solution was 0.5 seconds.

Example 13

As in Example 7, titanium oxide was included in the electrolyte of Example 12. The electrolyte was used in the electrochromic display device of Figure 7 driving being between the electrochromic electrodes and the counter electrode. In this example the counter electrode was a gold film and the applied voltage was +1.2 V. The response time was 0.5 seconds which is the same as that when an electrolytic solution was used in place of the solid electrolyte.

As explained above the electrolytes described in the foregoing examples can be used in electrochromic display devices in place of conventional electrolytic solutions. The response times achieved could be made of the same order as those achieved with electrolytic solutions by making the electrochromic display device thinner. The problems due to air bubbles experienced with electrolytic solutions was also overcome.

The electrolytes so far described in the Examples have used a cross-linked polymer which absorbs the electrolyte solution. However, intimate contact between the electrolyte and the electrodes of an electrochromic display device may not be achieved due to the swelling of the polymer as it absorbs the electrolytic solution. Thus the use of solid electrolytes in electrochromic display devices may become difficult. To obtain an electrolyte which is drier and adheres to electrodes of an electrochromic display device, the electrolytic solution, a monomer and a cross-linking agent may be polymerised to form a gel. This will be explained in greater detail with reference to the following Examples.

Example 14

Propylene carbonate is widely used as a solvent in electrochromic display devices which use tungsten oxide as the electrochromic material. Generally this solvent is used with a 1M $LiClO_4$ electrolytic solution. Methylacrylate is a monomer which is soluble in propylene carbonate, the formula of methylacrylate being:

$$\begin{array}{l} CH_2{=}CH \\ \quad\quad\;\; | \\ \quad\quad\; COOCH_3 \end{array}$$

When methylacrylate was added to the electrolyte solution, the solution did not polymerise to a gel but became viscous. A divinyl compound was found to be needed as a cross-linking agent. In this example divinylbenzene was used as the cross-linking agent, the initiator being azobisisobutyronitrile.

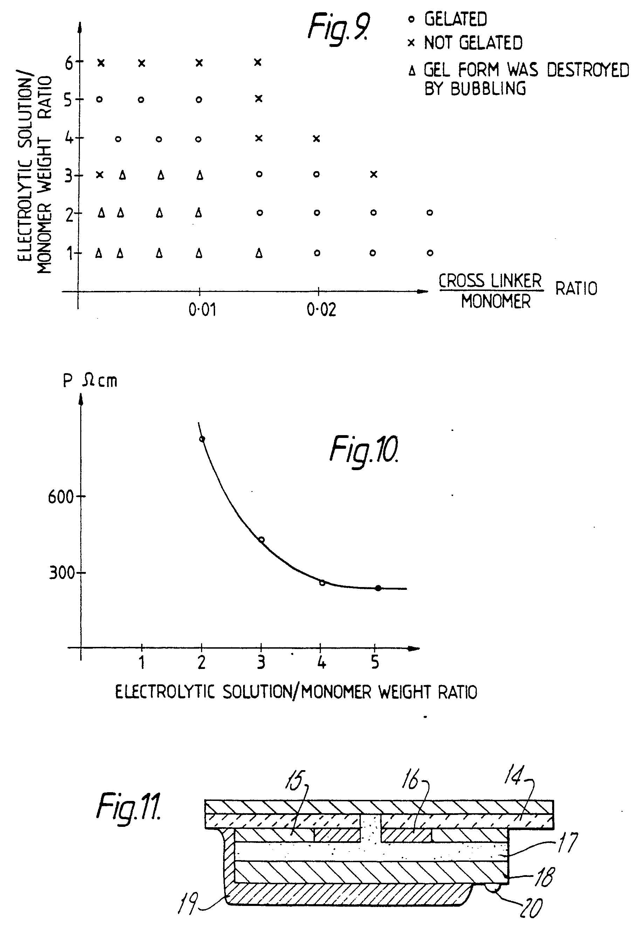

The weight of azobisisobutyronitrile was 0.005% of the monomer. The polymerisation reaction was carried out at a temperature of 50°C the reaction time being 1 hour. The gel formed under these polymerising conditions was investigated, the result being indicated in Figure 9. As will be clear from Figure 9 the requisite quantity of divinylbenzene depends on the quantity of electrolyte solution, too much cross-linking agent and too little cross-linking agent both being undesirable.

The electrical resistance of the resultant electrolyte which contained five times as much electrolytic solution as monomer was found to be 244 Ωcm. The electrical resistance of the electrolytic solution alone was around 300 Ωcm. The resistance of the electrolyte was, therefore, a little lower than that of the electrolytic solution.

As will be appreciated from Figure 9 the electrical conductivity of the electrolyte formed as above is by no means inferior to that of the electrolytic solution. In other words the variation of electrical conductivity with electrolytic solution/monomer weight ratio was investigated and it was found that the electrical conductivity was independent of the quantity of cross-linking agent. This is shown graphically in Figure 10 where it can be seen that the electrical conductivity of the electrolyte became substantially constant at a electrolytic solution/monomer weight ratio of 4, the electrical conductivity of the electrolyte being a little lower than that of the electrolytic solution.

In the previous Examples first a cross-linked polymer was synthesised and then the cross-linked polymer was treated to absorb the electrolytic solution. However, the polymer is completely wet so it is not possible to cause anything to adhere to it. The electrolyte of this Example, however, has a drier surface although not as dry as the surface of a truly solid electrolyte, but nonetheless it can adhere.

Especially when the electrolytic solution/monomer ratio is more than 3 the surface was found to be so adhesive that it could adhere to, for example, glass or a human finger. This characteristic is very advantageous in the manufacture of electrochromic display devices. For example, it is possible to fabricate a completely solid electrolytic display device in layers step by step, for example, by laying the solid electrolyte on the electrochromic electrodes and then the counter electrode on the solid electrolyte.

In this case, if the electrolyte is adhesive as referred to above, the electrolyte will adhere to the electrochromic display electrodes and the counter electrode and its position will be fixed. However, if the electrolyte is wet, the electrolyte cannot adhere to the electrochromic electrodes and the counter electrode and so its position cannot be fixed. This is very inconvenient. Even more important from the point of view of manufacture is the fact that the polymer can be stuck to a resist film and so it can be patterned by ordinary photolithography. However, if the polymer is wet it cannot be laminated with a resist film.

Figure 11 shows an electrochromic display device using the solid electrolyte of this Example. First, a glass plate 14 which had a transparent conductive film on its surface was made, the transparent conductive film being patterned. Then an insulating film 15 was patterned. Then a film 16 of tungsten oxide as the electrochromic material was formed by evaporating and patterning using a metal mask, this producing electrochromic electrodes. Next a solid electrolyte film 17 as described above was adhered. This electrolyte film was formed by polymerising a mixture of monomer and electrolytic solution in a mould at 50°C the reaction time being 1 hour. The electrolytic solution/monomer weight ratio was 4. Next a counter electrode 18 was formed on the electrolyte film by evaporating a polymer solution in which acetylene black had been dispersed. To be sure of intimate contact between the electrolyte and the counter electrode the same polymer and the same solution were used for the formation of the counter electrode as was used for the electrolyte. In this instance acetylene black was dispersed in propylene carbonate containing methylacrylate polymer. On the counter electrode a protective layer 19 of an epoxy polymer was formed leaving an exposed domain 20 to form an electrical contact with the counter electrode.

The display pattern of this electrochromic display device was as shown in Figure 8. Colouring and bleaching was performed by an applied voltage of +1V and the response time was found to be 0.5 seconds, the same as that obtained when using the liquid electrolyte alone.

Example 15

In Example 14 methylacrylate was used to gel propylene carbonate. Vinylacetate which has a similar structure to methylacrylate has the formula:

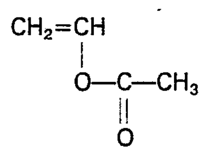

was also tried. Divinylbenzene was used as the cross-linking agent but it was found to be impossible to cause gelation. When the divinylbenzene/vinylacetate ratio was varied, when this ratio was extremely small (<0.02 weight ratio), polymerisation did not produce a gelation but only a viscous solution and where this ratio was large (>0.1 weight ratio) only divinylbenzene was polymerised, and the polymer was separated from the liquid phase. In between these limits polymerisation was difficult. At higher temperatures with more initiator, viscous solutions only were produced. This makes it clear that the reactivity of the cross-linking agent and the monomer must be matched properly in order to cause gelation.

Example 16

In this example, acetonitrile, which is widely used as a solvent of electrolytic solutions of electrochromic display devices was gelated. The monomer was vinylacetate and the cross-linking agent was divinyladipate whose formula is:

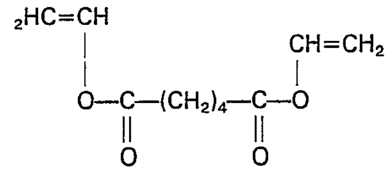

0.1M $LiClO_4$/acetonitrile solution was prepared. Vinylacetate, divinyladipate and azobisisobutylonitrile were added to the solution. In this case polymerisation was independent of the quantity of initiator but was dependent on the quantity of cross-linking agent and electrolyte solution. Polymerisation was investigated when the quantity of electrolyte solution and the cross-linking agent was varied, polymerisation being effected at 50°C for 1 hour. The results are indicated in Table 1. Compared with Example 14, it is clear that more cross-linking agent was needed. The reason is thought to be that the solubility of vinylacetate in acetonitrile is so high that the degree of cross-linking must be large for gelation.

TABLE 1

| | | Cross-linking agent/monomer weight ratio | | |
|---|---|---|---|---|
| | | 0.01 | 0.02 | 0.03 |
| electrolyte solution/monomer weight ratio | 1 | gelated | gelated | gelated |
| | 2 | not gelated | not gelated | gelated |
| | 3 | not gelated | not gelated | gelated |

The electrical conductivity was measured on the electrolyte of Table 1. Electrical conductivity was found to be in the range of 200—400 Ωcm. The electrical conductivity of 0.1M $LiClO_4$/acetonitrile solution was around 150 Ωcm so the electrical resistance of the electrolyte was slightly higher but not unacceptably so.

The electrolyte in Table 1 whose electrolytic solution/monomer ratio was 3 and whose cross-linking agent/monomer ratio was 0.05 was used in the electrochromic display device of Figure 11. The electrochromic material was tungsten oxide. A solid electrochromic display device was obtained with a response time of 0.5 seconds.

Example 17

In this example an aqueous solution was gelated. Acrylamide which is soluble in water was used as the monomer and the cross-linking agent was methylenebisacrylamide whose formula is:

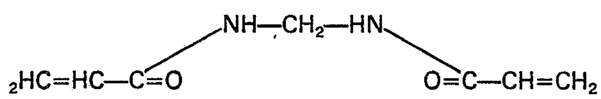

In a 1M KCl aqueous solution, acrylamide, methylenebisacrylamide and potassium persulphate as an initiator were dissolved. When this solution was warmed at 50°C polymerisation occurred rapidly gelation being completed in 30 minutes. The polymerisation of the electrolyte so produced was investigated and the result shown in Table 2.

TABLE 2

| | | Cross-linking agent/monomer weight ratio | | |
|---|---|---|---|---|
| | | 0.0001 | 0.0005 | 0.001 |
| electrolytic solution/monomer weight ratio | 5 | gelated | gelated | gelated |
| | 7 | not gelated | gelated | gelated |
| | 10 | not gelated | not gelated | not gelated |

As is clear from Table 2, the requisite quantity of cross-linking agent was small compared with the previous Examples. The electrolyte with the electrolytic solution/monomer weight ratio of 5 and the cross-linking/monomer weight ratio of 0.0005 was used in the electrochromic display device of Figure 1. The electrochromic material in this instance was not tungsten oxide but Prussian blue. Prussian blue electrochromic electrodes were formed by the electrochemical reduction of an aqueous solution containing ferricyanide and ferric chloride.

The colouring and bleaching of the electrochromic electrodes was performed by an applied voltage of

+1V. Response time was 1 second. This was the same value as for the electrolytic solution alone, no delay due to the use of a solid electrolyte being observed.

The electrolyte was adhesive and once adhered to the electrochromic electrodes it could not be detached without force being used. This property was also observed in Example 16.

Thus not only can a gelated electrolyte be obtained but also the response time when it is used in electrochromic display devices is by no means inferior to that of electrolytic solutions and its adhesion properties make it easy to handle.

**Claims**

1. An electrochromic display device having at least two electrodes (3, 5; 9, 12; 16, 18) at least one (3; 9; 16) of which is made of electrochromic material, and an electrolyte (4; 10; 17) which is an electrolytic solution gelated by a polymer, characterised in that the solvent of the solution is propylene carbonate, and said polymer is a copolymer of any one of vinylacetate, methylmethacrylate, methylacrylate, vinylpyridine and vinylpyrrolidone and any one of styrene, vinylchloride, ethylene, propylene and vinyl carbazole.

2. An electrochromic display device as claimed in claim 1, characterised in that the copolymer is made from vinylacetate and ethylene, the vinylacetate being present in a molar ratio of 70—80%.

3. An electrochromic display device having at least two electrodes (3, 5; 9, 12; 16, 18) at least one (3; 9; 16) of which is made of electrochromic material, and an electrolyte (4; 10; 17) which is an electrolytic solution gelated by a polymer, said polymer being cross-linked by a cross-linking agent, characterised in that the triple "polymer-cross-linking agent-solvent" is one of the following: polyvinyl alcohol—dicarboxylic acid or anhydride—water, polyacrylamide—methylenebisacrylamide—water, polymethylacrylate—divinylbenzene—propylene carbonate, polyvinylacetate—divinylbenzene—propylene carbonate, polyvinylacetate—divinyladipate—acetonitrile.

4. An electrochromic display device as claimed in claim 3 characterised in that the dicarboxylic acid is maleic acid or adipic acid and the dicarboxylic anhydride is pyromellitic dianhydride or maleic anhydride.

5. An electrochromic display device as claimed in claim 4 characterised in that the pyromellitic dianhydride/polyvinylalcohol weight ratio is more than 0.02.

**Patentansprüche**

1. Elektrochrome Anzeigevorrichtung mit mindestens zwei Elektroden (3, 5; 9, 12; 16, 18), von denen mindestens eine (3; 9; 16) aus elektrochromem Material ist und einem Elektrolyten (4; 10; 17), der eine elektrolytische Lösung, die mit Hilfe eines Polymers geliert wurde, ist, dadurch gekennzeichnet, daß das Lösungsmittel der Lösung Propylencarbonat ist und daß das Polymer ein Copolymer von einem Mitglied der Gruppe Vinylacetat, Methylmethacrylat, Methylacrylat, Vinylpyridin und Vinylpyrrolidon mit einem Mitglied der Gruppe Styrol, Vinylchlorid, Ethylen, Propylen und Vinylcarbazol ist.

2. Elektrochrome Anzeigevorrichtung nach Anspruch 1, dadurch gekennzeichnet, daß das Copolymer hergestellt wurde aus Vinylacetat und Ethylen, wobei Vinylacetat in einem molaren Verhältnis von 70 bis 80% vorhanden ist.

3. Elektrochrome Anzeigevorrichtung mit mindestens zwei Elektroden (3, 5; 9, 12; 16, 18), von denen mindestens eine (3; 9; 16) aus elektrochromem Material ist und einem Elektrolyten (4; 10; 17), der eine elektrolytische Lösung, die mit Hilfe eines Polymers geliert wurde, ist, wobei das Polymer durch ein Vernetzungsmittel vernetzt wurde, dadurch gekennzeichnet, daß das Triple "Polymer—Vernetzungsmittel—Lösungsmittel" eines der folgenden ist: Polyvinylalkohol—Dicarbonsäure oder -anhydrid—Wasser, Polyacrylamid—Methylenbisacrylamid—Wasser, Polymethylacrylat—Divinylbenzol—Propylencarbonat, Polyvinylacetat—Divinylbenzol—Propylencarbonat, Polyvinylacetat—Divinyladipat—Acetonitril.

4. Elektrochrome Anzeigevorrichtung nach Anspruch 3, dadurch gekennzeichnet, daß die Dicarbonsäure Maleinsäure oder Adipinsäure ist und daß Dicarbonsäureanhydrid Pyromellitsäuredianhydrid oder Maleinsäureanhydrid ist.

5. Elektrochrome Anzeigevorrichtung nach Anspruch 4, dadurch gekennzeichnet, daß das Gewichtsverhältnis von Pyromellitsäuredianhydrid zu Polyvinylalkohol mehr als 0,02 ist.

**Revendications**

1. Un dispositif d'affichage électrochroïque ayant au moins deux électrodes (3, 5; 9, 12; 16, 18), dont l'une au moins (3; 9; 16) est faite d'une substance électrochroïque, et un électrolyte (4; 10; 17) qui est une solution électrolytique gélifiée par un polymère, caractérisé en ce que le solvant de la solution est le carbonate de propylène et ledit polymère est un copolymère d'un composant quelconque choisi parmi l'acétate de vinyle, le méthacrylate de méthyle, l'acrylate de méthyle, la vinylpyridine et la vinylpyrrolidone et un composant quelconque choisi parmi le styrène, le chlorure de vinyle, l'éthylène, le propylène et le vinylcarbazole.

2. Un dispositif d'affichage électrochroïque selon la revendication 1, caractérisé en ce que le copolymère est constitué d'acétate de vinyle et d'éthylène, l'acétate de vinyle étant présent dans une proportion molaire de 70—80%.

3. Un dispositif d'affichage électrochroïque ayant au moins deux électrodes (3, 5; 9, 12; 16, 18) dont l'une au moins (3; 9; 16) est faite d'une substance électrochroïque et un électrolyte (4; 10; 17) qui est une solution électrolytique gélifiée par un polymère, ledit polymère étant réticulé par un agent réticulant, caractérisé en ce que le système ternaire "polymère-agent réticulant-solvant" est choisi parmi les systèmes suivants: alcool polyvinylique—acide ou anhydride dicarboxylique—eau, polyacrylamide—méthylène-bisacrylamide—eau, polyacrylate de méthyle—divinylbenzène—carbonate de propylène, acétate de polyvinyle—divinylbenzène—carbonate de propylène, acétate de polyvinyle—adipate de divinyle—acétonitrile.

4. Un dispositif d'affichage électrochroïque selon la revendication 3, caractérisé en ce que l'acide dicarboxylique est l'acide maléique ou l'acide adipique et l'anhydride dicarboxylique est le dianhydride pyromellitique ou l'anhydride maléique.

5. Un dispositif d'affichage électrochroïque selon la revendication 4, caractérisé en ce que le rapport pondéral dianhydride pyromellitique/alcool polyvinylique est de plus de 0,02.

Fig.1.

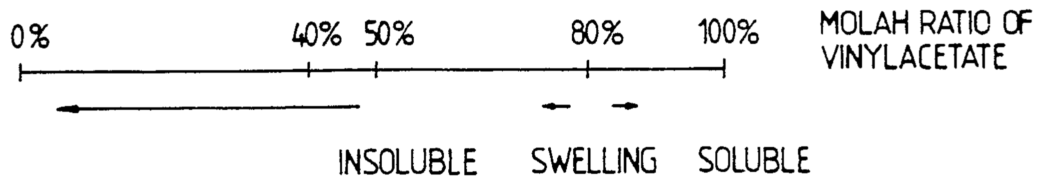


Fig.2.

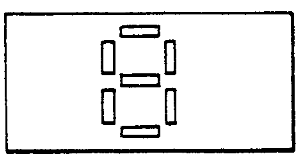

Fig.3.

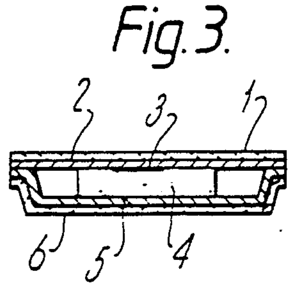


Fig.4.

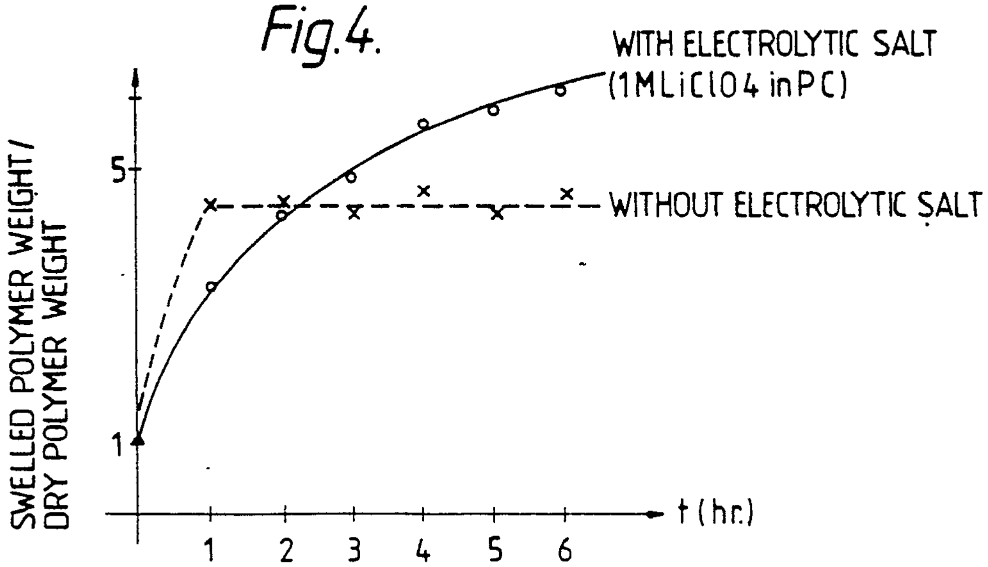

Fig.5.

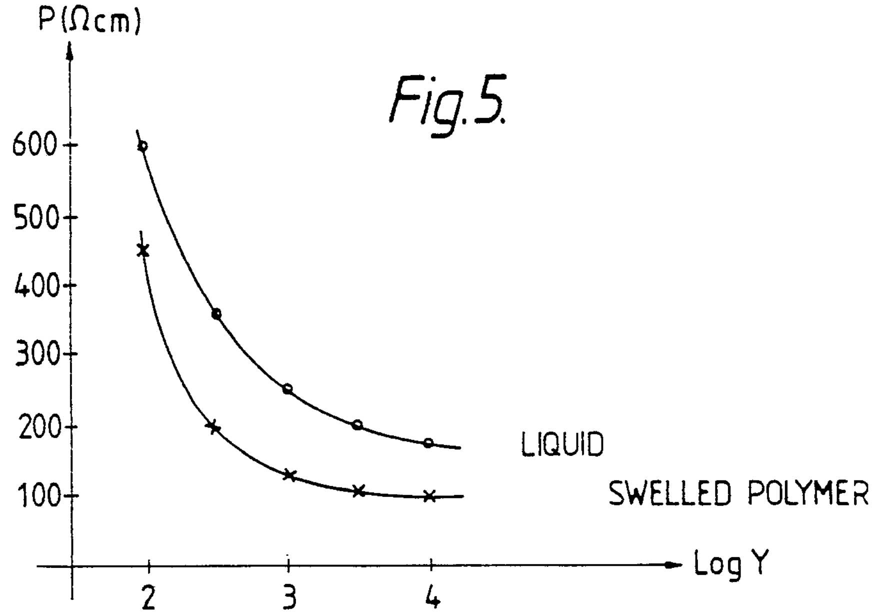


Fig.6.

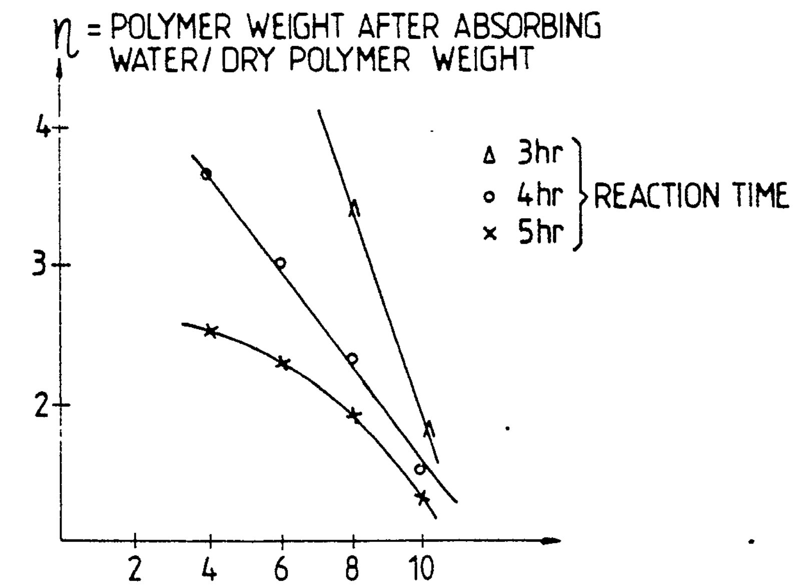


Fig.7.

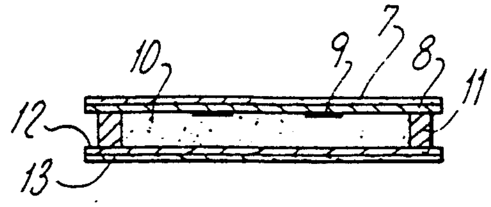


Fig.8.

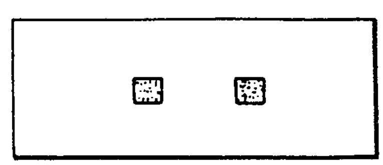

Fig.9.

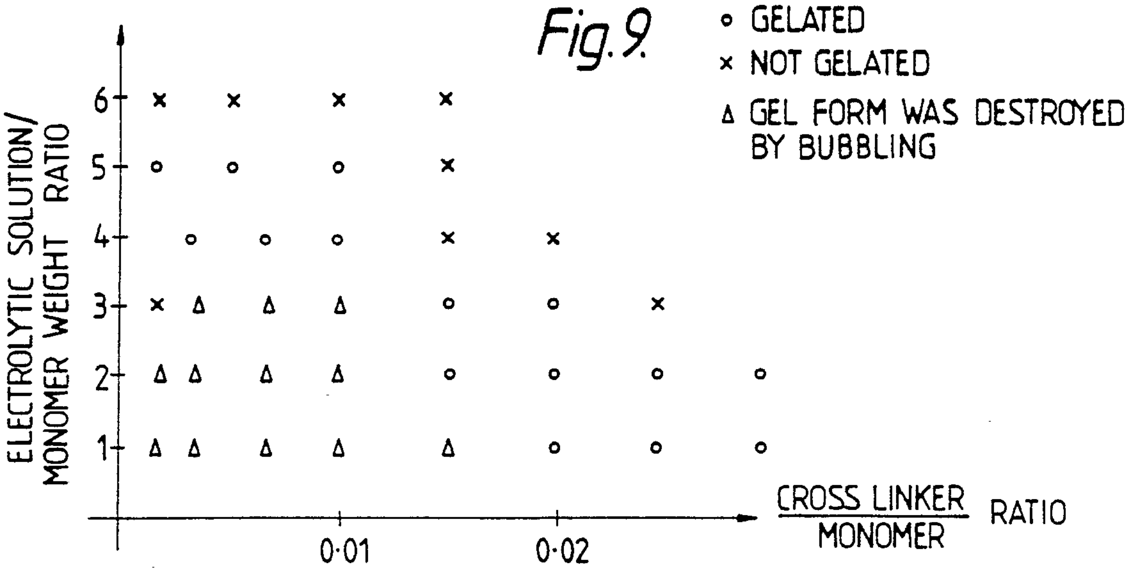


Fig.10.

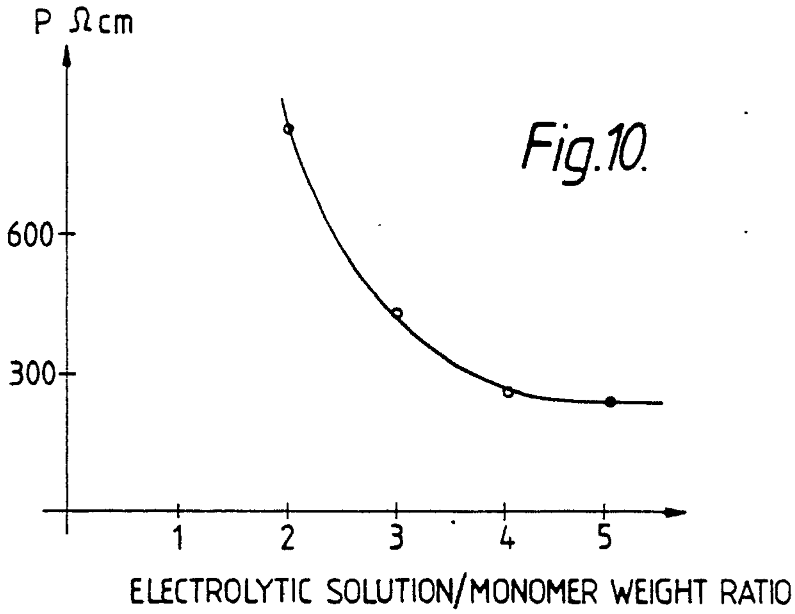


Fig.11.